# EUROPÄISCHE PATENTSCHRIFT

(11) **EP 0 668 823 B1**
(45) Veröffentlichungstag und Bekanntmachung des Hinweises auf die Patenterteilung: **27.03.1996**
(21) Anmeldenummer: 94900004.6
(22) Anmeldetag: 09.11.1993
(51) Int. Cl.: B32B 27/12, B32B 25/08, B32B 25/10

(54) **MEHRSCHICHTIGE STOFFBAHN ZUR BILDUNG VON FLEXIBLEN BEHÄLTERN, ZELTEN, PLANEN, SCHUTZANZÜGEN U.DGL.**
MULTILAYER WEB OF FABRIC FOR USE IN THE FABRICATION OF FLEXIBLE CONTAINERS, TENTS, TARPAULINS, PROTECTIVE CLOTHING, ETC.
BANDE DE TISSU MULTICOUCHE UTILISEE DANS LA FABRICATION DE CONTENANTS SOUPLES, DE TENTES, DE BACHES, DE VETEMENTS DE PROTECTION ET ANALOGUES

(30) Priorität: 16.11.1992 AT 2251/92
(43) Veröffentlichungstag der Anmeldung: 30.08.1995
(73) Patentinhaber: Haager, Volker Ing., A-1050 Wien (AT); PHOENIX AKTIENGESELLSCHAFT, D-21079 Hamburg (DE)
(72) Erfinder: Haager, Volker, A-1050 Wien (AT)
(74) Vertreter: Rippel, Andreas, Dipl.-Ing.
(86) Internationale Anmeldenummer: AT9300172
(87) Internationale Veröffentlichungsnummer: WO9411187

(56) Entgegenhaltungen:
- EP-A- 0 432 492
- WO-A-91/03379
- DE-A- 3 907 453
- DE-A- 3 908 991
- US-A- 4 442 162

## Beschreibung

Die Erfindung bezieht sich auf eine mehrschichtige Stoffbahn zur Bildung von flexiblen Behältern, Zelten, Planen, Schutzanzügen u.dgl., mit einer Gewebeschicht, einer auf einer Seite der Gewebeschicht befindlichen Gummischicht und einer auf der anderen Seite der Gewebeschicht befindlichen Kunststoff-Folie, die sich zwischen zwei Gummischichten befindet.

Aus der DE-A1-39 07 453 ist eine derartige Stoffbahn bekannt geworden, bei der als Kunststoff-Folie eine Polyimidschicht verwendet wird, die zwischen zwei Schichten aus einer Fluorkautschukmischung eingebettet ist. Als Fluorkautschuk wird dabei eine Mischung verwendet, die unter der Marke VITON® im Handel ist. Die Schicht aus VITON® soll die Polyimidschicht gegen UV-Strahlen schützen, gegen die dieses Material nicht sehr beständig ist.

Auch aus der EP-A1-0 432 492 und der WO 91/03379 ist die Verwendung von VITON® gegen die Einwirkung von Chemikalien und Gasen bekannt.

Es ist ein Ziel vorliegender Erfindung, eine mehrschichtige Stoffbahn zu schaffen, die zur Bildung von flexiblen Behältern, Zeiten, Planen, Schutzanzügen u. dgl. geeignet ist, einen Schutz gegen chemische Kampfstoffe, aber auch sonstige Chemikalien bietet und bessere Eigenschaften als die bekannten Stoffe aufweist. Erreicht wird dieses Ziel dadurch, daß die Kunststoff-Folie aus Polyvinylidenfluorid besteht.

Wie zahlreiche Versuche gezeigt haben, ist eine erfindungsgemäße Stoffbahn tatsächlich außerordentlich widerstandsfähig, und zwar nicht nur in mechanischer Hinsicht, sondern auch gegen praktisch alle chemischen Kampfstoffe und Chemikalien.

Durch die beidseits der Polyvinylidenfluoridschicht angeordneten Gummischichten wird überraschenderweise auch die Geschmeidigkeit der Stoffbahn erhöht und damit deren Handhabung erleichtert.

Bei Anordnung einer Gummischicht auf der Außenseite der Schicht aus Polyvinylidenfluorid wird nicht nur ein, bei Einwirkung von chemischen Kampfstoffen besonders wichtiger, Schutz der Polyvinylidenfluoridschicht erreicht, die zusätzliche Gummischicht übt auch eine Indikatorwirkung aus, weil die Beschädigung der Gummischicht viel leichter festzustellen ist als eine Beschädigung der Polyvinylidenfluoridschicht; ist die Gummischicht beschädigt, kann geprüft werden, ob auch die Polyvinylidenfluoridschicht in Mitleidenschaft gezogen ist und die Plane, der Schutzanzug od. dgl. ausgewechselt werden muß.

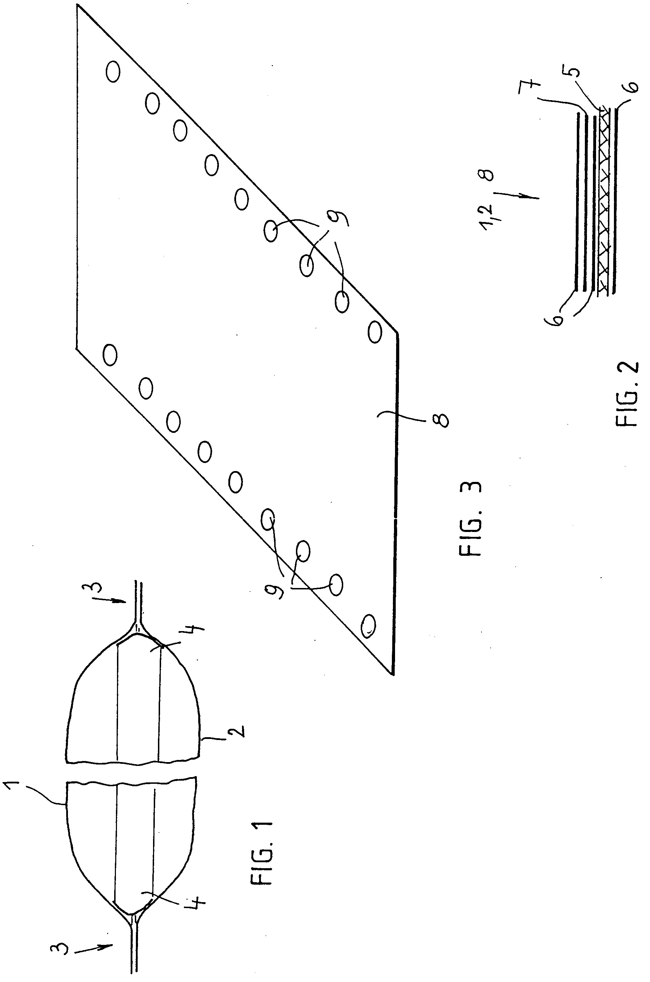

Nachstehend ist die Erfindung anhand von in den Zeichnungen dargestellten Ausführungsbeispielen näher erläutert, ohne jedoch auf diese Beispiele beschränkt zu sein. Dabei zeigen: Fig. 1 einen Schnitt durch einen flexiblen Flüssigkeitsbehälter, Fig. 2 den Aufbau der für den Behälter nach Fig. 1 verwendeten mehrschichtigen Stoffbahn und Fig. 3 die schaubildliche Ansicht einer Plane z.B. zum Abdecken von militärischem Gerät.

Gemäß Fig. 1 besteht ein flexibler Flüssigkeitsbehälter oder -tank aus zwei an den Rändern miteinander verbundenen mehrschichtigen Stoffbahnen 1 und 2. Zur Verstärkung der Randverbindungen sind Verstärkungsstreifen 4 angebracht. Der Behälter ist in bekannter Weise mit Öffnungen (nicht dargestellt) versehen, die das Füllen und die Entnahme der Flüssigkeit sowie eine Entlüftung ermöglichen.

Wie aus Fig. 2 ersichtlich bestehen die mehrschichtigen Stoffbahnen 1 und 2 aus einer Gewebeschicht 5, auf der an beiden Seiten eine Gummischicht 6 angebracht ist. Die in der Zeichnung obere Gummischicht 6 ist von einer Schicht 7 aus Polyvinylidenfluorid bedeckt, über der eine weitere Gummischicht 6 angeordnet ist. Die zwischen den beiden Gummischichten 6 befindliche Schicht 7 aus Polyvinylidenfluorid liegt bei Behältern zum Transport von kontaminiertem Gut auf der Innenseite. Bei sonstigen Anwendungszwecken wird diese Schicht 7, eingeschlossen von zwei Gummischichten 6, auf der Außenseite der Gewebeschicht liegen.

Wie bereits ausgeführt, ist die Schicht 1 aus Polyvinylidenfluorid als Folie ausgebildet. Die Gummischicht wird in einem an sich bekannten Gummierungsverfahren aufgebracht und die einzelnen Schichten durch Vulkanisation verbunden. Es kann dabei während etwa 20 Minuten eine Temperatur von ungefähr 140 bis 175 Grad C sowie ein Druck in der Größenordnung von 3 bar angewendet werden.

In Fig. 3 ist schaubildlich eine Plane dargestellt, wie sie zum Abdecken insbesondere von militärischem Gerät verwendet werden kann. Eine mehrschichtige Stoffbahn 8 ist an den Seiten mit Ösen 9 versehen, sodaß eine Befestigung der Plane möglich ist. Die Stoffbahn 8 hat den gleichen grundsätzlichen Aufbau wie die Stoffbahnen 1 und 2.

Im Rahmen der Erfindung sind zahlreiche Abänderungen möglich. So kann die mehrschichtige Stoffbahn nach der Erfindung z.B. auch zur Bildung von Behältern verwendet werden, in denen kontaminiertes Erdreich od. dgl. zu einer Prüfstelle gebracht wird. Es können Zelte, ABC-Schleusen, Schutzanzüge u. dgl. mehr aus erfindungsgemäßen mehrschichtigen Stoffbahnen hergestellt werden. Je nach Beanspruchungsart werden die Flächengewichte schwanken, wobei sie sich etwa in der Größenordnung von 350 g/m² bis 1500 g/m² bewegen.

## Patentansprüche

1. Mehrschichtige Stoffbahn zur Bildung von flexiblen Behältern, Zelten, Planen, Schutzanzügen u.dgl., mit einer Gewebeschicht (5), einer auf einer Seite der Gewebeschicht (5) befindlichen Gummischicht (6) und einer auf der anderen Seite der Gewebeschicht (5) befindlichen Kunststoff-Folie (7), die sich zwischen zwei Gummischichten (6) befindet, **dadurch gekennzeichnet**, daß die Kunststoff-Folie aus Polyvinylidenfluorid besteht.

## Claims

1. Multilayered textile web for forming flexible containers, tents, awnings, protective suits and the like, with a textile layer (5), a rubber layer (6) located on one side of the textile layer (5), and with a plastics film (7) located on the other side of the textile layer (5), said plastics film being located between two rubber layers (6), **characterised in that** the plastics film comprises polyvinylidene fluoride.

## Revendications

1. Pan d'étoffe à plusieurs couches pour la formation de récipients flexibles, tentes, bâches, vêtements de protection etc., composé d'une couche de tissu (5), une couche de caoutchouc (6) attachée à un côté de la couche de tissu (5) et une feuille en matière plastique (7) insérée entre deux couches de caoutchouc (6) et attachée à l'autre côté de la couche de tissu (5), **caracterisé en ce que** la feuille en matière plastique est faite de fluorure de polyvinylidène.
